# EUROPÄISCHE PATENTANMELDUNG

(11) **EP 4 087 235 A1**
(43) Veröffentlichungstag der Anmeldung: **09.11.2022**
(21) Anmeldenummer: 21172519.7
(22) Anmeldetag: 06.05.2021
(51) Int. Cl.: H04N 5/783, G11B 27/00, H04N 21/84

(54) **ABSPIELEN VON AKUSTISCHEN DATEN**

(71) Anmelder: Siemens Aktiengesellschaft, 80333 München (DE)
(72) Erfinder: Bäse, Gero, 82008 Unterhaching (DE)

(57) **Zusammenfassung**

Die Erfindung betrifft ein Verfahren zur Wiedergabe von zweiten akustischen Daten (2a2, 2a4, 2a8, 2aX), mit den Schritten:
- Abrufen (S1) eines Wiedergabefaktors, welcher angibt mit welcher Dauer eine Datei wiedergegeben werden soll, wobei die Datei erste akustische Daten (1a) aufweist,
- Abrufen (S2) von zweiten akustischen Daten (2a2, 2a4, 2a8, 2aX), wobei die zweiten akustischen Daten (2a2, 2a4, 2a8, 2aX) in Abhängigkeit des Wiedergabefaktors gewählt werden und wobei Informationen der zweiten akustischen Daten (2a2, 2a4, 2a8, 2aX) Informationen der ersten akustischen Daten (1a) entsprechen,
wobei die zweiten akustische Daten (2a2, 2a4, 2a8, 2aX) eine Ablaufgeschwindigkeit aufweisen, welche einer Ablaufgeschwindigkeit der ersten akustischen Daten (1a) entspricht und
- Abspielen (S3) der zweiten akustischen Daten (2a2, 2a4, 2a8, 2aX).

## Beschreibung

### HINTERGRUND DER ERFINDUNG

### Gebiet der Erfindung

Die vorliegende Erfindung betrifft ein Verfahren zum Abspielen von zweiten akustischen Daten. Die Erfindung betrifft außerdem ein Verfahren zur Ausführung von mindestens einer Aktion an einer technischen Anlage oder einem technischen Gerät. Die Erfindung betrifft außerdem ein zugehöriges Gerät, insbesondere ein Augmented Reality Gerät oder ein Virtual Reality Gerät, ein Computerprogrammprodukt und ein computerlesbares Medium.

### Beschreibung des Stands der Technik

Videos, Virtual Reality (VR) Anwendungen, Augmented Reality (AR) Anwendungen und/oder andere visuelle Medien, insbesondere mit Trainings- oder Schulungsinhalten, gewinnen zunehmend an Bedeutung. Sucht man eine bestimmte Stelle in diesen Medien, um diese zu vertiefen, fliegt der restliche Inhalt am Nutzer vorbei. Das kann insbesondere bei sicherheitsrelevanten Inhalten problematisch sein.

Bei der Nutzung von einer Trick-Play Funktionalität, wie insbesondere schneller Vorlauf, tritt bei der Audiospur der Mickey-Mouse Effekt ein, d.h. die Sprache wird in einen höheren Frequenzbereich verschoben und je nach gewählter Geschwindigkeit wird die akustische Information für den Menschen unverständlich wiedergegeben.

Während das Auge ist möglicherweise noch in der Lage der schnelleren Wiedergabe der visuellen Information zu folgen, kann die akustische Information der Audiospur hingegen vollständig verloren gehen.

Ähnlich ist dies bei Filmen, die über das Internet gestreamt werden. Hier wird der künstlerische Wert beeinträchtigt, insbesondere im Audiobereich und das Verständnis des Inhaltes wird ebenfalls beeinträchtigt.

Die Aufgabe der Erfindung besteht darin, eine Lösung für eine verbesserte Bereitstellung von akustischer Information bei Wahl eines schnellen Vorlaufs eines visuellen Mediums mit Audiospur anzugeben.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Wiedergabe von zweiten akustischen Daten, mit den Schritten:
- Abrufen eines Wiedergabefaktors, welcher angibt mit welcher Dauer eine Datei wiedergegeben werden soll, wobei die Datei erste akustische Daten aufweist,
- Abrufen von zweiten akustischen Daten, wobei die zweiten akustischen Daten in Abhängigkeit des Wiedergabefaktors gewählt werden und wobei Informationen der zweiten akustischen Daten Informationen der ersten akustischen Daten entsprechen,
   wobei die zweiten akustische Daten eine Ablaufgeschwindigkeit aufweisen, welche einer Ablaufgeschwindigkeit der ersten akustischen Daten entspricht, und
- Wiedergeben der zweiten akustischen Daten.

Die Datei kann dabei bei einem Nutzer lokal abgespeichert sein oder von einem Anbieter gestreamt werden.

Dem Abrufen des Wiedergabefaktors kann ein Berechnen des Wiedergabefaktors vorangehen. Nach dem Berechnen kann der Wiedergabefaktor gespeichert oder zwischengespeichert werden.

Die Ablaufgeschwindigkeit im Sinne der Erfindung betrifft die Geschwindigkeit, mit der eine Audiospur wiedergegeben wird, insbesondere die Sprechgeschwindigkeit der ersten und zweiten akustischen Daten.

Der Wiedergabefaktor im Sinn der Erfindung, wird in Bezug auf gesamte Datei gewählt. Die zweite akustische Information und die zweite visuelle Information werden in Abhängigkeit des Wiedergabefaktor gewählt bzw. sind diesem zugehörig.

Die Ablaufgeschwindigkeit der zweiten akustische Information ist in der Regel nicht proportional zu dem Wiedergabefaktor, die Ablaufgeschwindigkeit der zweiten visuellen Informationen hingegen ist in der Regel proportional zu dem Wiedergabefaktor.

Ein Aspekt der Erfindung besteht darin, dass in Abhängigkeit des Wiedergabefaktors zweite akustischen Daten gewählt werden und Informationen der zweiten akustischen Daten Informationen der ersten akustischen Daten entsprechen. Die ersten akustischen Daten und die zweiten akustischen Daten weisen dabei dieselbe Ablaufgeschwindigkeit auf. Dies bedeutet, dass die Sprechgeschwindigkeiten der ersten akustischen Daten und der zweiten akustischen Daten gleich sind.

Auch entsprechen die Informationen der ersten und zweiten akustischen Daten einander. Das bedeutet, dass die Informationen der zweiten akustischen Daten durchaus gekürzt sein können oder eine andere Form aufweisen können, aber insbesondere einen selben essenziellen Inhalt an Informationen aufweisen können. Je nach gewähltem Wiedergabefaktor sind die zweiten akustischen Daten anderen Umfangs, je höher der Wiedergabefaktor, desto kürzer der zeitliche Ablauf der zweiten akustischen Daten, während die Ablaufgeschwindigkeit, d.h. die Sprechgeschwindigkeit, konstant ist.

In einer Weiterbildung der Erfindung ist die Datei als:
- eine Videodatei,
- eine Trainingsvideodatei,
- eine Anleitungsvideodatei,
- eine Beratungsvideodatei,
- eine Wegleitungsvideodatei,
- eine Augmented Reality (AR) Datei und/oder
- eine Virtual Reality (VR) Datei
   und/oder vorzugsweise
- eine Anleitungsdatei,
- eine Wartungsdatei,
- eine Servicedatei und/oder
- eine Montagedatei
   ausgebildet.

Dabei ist hervorzuheben das für eine Augmented Reality Datei der Wiedergabefaktor aus einer Fortbewegungsgeschwindigkeit eines Benutzers gewonnen werden kann. In den anderen Weiterbildungen kann der Wiedergabefaktor als ein Vorspulfaktor betrachtet werden, welche insbesondere von einem Nutzer wählbar ist.

Die Erfindung bietet den Vorteil, dass wenn in der Datei, insbesondere in einem VR-Training, nach bestimmten Sequenzen gesucht wird, zumindest die essenziell wichtig Information zeitlich vor den bestimmten Sequenzen auch auf dem Audioweg dargestellt werden kann. Hier wird auch der spezielle Audiotrack wichtig, wenn insbesondere sicherheitsrelevante Informationen zwingend dem Nutzer präsentiert werden sollen.

In einer weiteren Weiterbildung der Erfindung ist der Wiedergabefaktor von:
- einer Benutzereingabe,
- von einer Fortbewegungsgeschwindigkeit eines Benutzers,
- von einer Zeitangabe,
- von einem definierbaren Ablaufplan,
- von einer örtlichen Position eines Benutzers und/oder
- von einer örtlichen Position einer Sendeeinheit abhängig.

Dabei ist hervorzuheben, dass für eine Augmented Reality Datei die Augmentation Information den ersten zw. zweiten visuellen Daten entspricht. Ein Vorspulen in einer Videodatei kann als eine "überdurchschnittlich schnelle" Bewegung durch den Benutzer in der physikalischen Umgebung betrachtet werden. Die Augmentation ist in diesem Fall örtlich gebunden und muss durch die zu schnelle Bewegung "vorgespult" werden. Die örtliche Position eines Benutzers bestimmt somit den Wiedergabefaktor.

In einer weiteren Weiterbildung der Erfindung weist das Verfahren den weiteren Schritt eines Wiedergebens von zweiten visuellen Daten, welche in Abhängigkeit ersten visuellen Daten und des Wiedergabefaktors gewählt werden, wobei die ersten visuellen Daten von der Datei aufgewiesen werden, auf. Das hat den Vorteil, dass zusätzlich zu den zweiten akustischen Daten auch zweite visuelle Daten wiedergegeben werden.

In einer weiteren Weiterbildung der Erfindung weisen die zweiten visuellen Daten eine größerer Ablaufgeschwindigkeit als die ersten visuellen Daten aufweisen. Dies bedeutet, dass die zweiten visuellen Daten in Zeitraffer wiedergegeben werden. Die zweiten visuellen Daten enthalten somit dieselben Bildinformationen die einzelnen Bild-Frames laufen aber schneller ab, das heißt jeder einzelne Bild-Frame hat eine kürzere Anzeigedauer.

Als Alternative zur zuvor genannten Weiterbildung haben die ersten visuellen Daten und die zweiten visuellen Daten dieselbe Ablaufgeschwindigkeit. In diesem Fall laufen die zweiten visuellen Daten nicht im Zeitraffer ab. Stattdessen werden Ausschnitte aus den ersten visuellen Daten gewählt und die Ausschnitte zu den zweiten visuellen Daten zusammengefügt. Es werden somit einzelne Bild-Frames ausgewählt.

In einer weiteren Weiterbildung der Erfindung weist das Wiedergeben der zweiten visuellen Daten und das Weidergeben der zweiten akustischen Daten unterschiedliche Abspieldauern auf. Unterschiedliche Abspieldauern können insbesondere durch eine sehr hohen Wiedergabefaktor entstehen, da hier die zweiten visuellen Daten eine kurzer Abspieldauer aufweisen können als die zweiten akustischen Daten, da die zweiten akustischen Daten insbesondere sicherheitsrelevante Informationen aufweisen können, welche zwingend abgespielt werden sollen und somit eine unterer Schwellwert der Abspieldauer nicht überschritten werden kann.

In einer weiteren Weiterbildung der Erfindung weisen die zweiten visuellen Daten eine größerer Ablaufgeschwindigkeit als die ersten visuellen Daten auf. Das hat den Vorteil, dass die Ablaufdauer der zweiten visuellen Daten kürzer als die der ersten visuellen Daten ist.

In einer weiteren Weiterbildung der Erfindung weisen die ersten akustischen Daten variable Ablaufgeschwindigkeit auf. Für die ersten akustischen Daten ist somit eine Ablaufgeschwindigkeit variabel wählbar. Die Ablaufgeschwindigkeit kann einer 0,5 bis 2,5-fachen Geschwindigkeit einer Default-Geschwindigkeit entsprechen. Die erste Ablaufgeschwindigkeit wird für die zweite Ablaufgeschwindigkeit übernommen. Die Ablaufgeschwindigkeit bezeichnet die Geschwindigkeit, mit der eine Audiospur abläuft und kann auch als Sprechgeschwindigkeit bezeichnet werden.

In einer weiteren Weiterbildung der Erfindung weisen die ersten, wie auch zweiten akustischen Daten eine für den Menschen verständliche Ablaufgeschwindigkeit auf. Somit kann wie oben beschrieben, die Ablaufgeschwindigkeit einer 0,5 bis 2,5-fachen Geschwindigkeit einer Default-Geschwindigkeit entsprechen. Höhere Ablaufgeschwindigkeiten sind für den Menschen in der Regel nicht mehr verständlich und es tritt eine Verschiebung in einen höheren, unangenehmen Frequenzbereich ein. Die erste Ablaufgeschwindigkeit wird für die zweite Ablaufgeschwindigkeit übernommen. Die Ablaufgeschwindigkeit bezeichnet die Geschwindigkeit, mit der eine Audiospur abläuft und kann auch als Sprechgeschwindigkeit bezeichnet werden.

In einer weiteren Weiterbildung der Erfindung weisen die zweiten akustischen Daten eine kürzere Ablaufdauer als die ersten akustischen Daten auf. Dadurch das die zweiten akustischen Daten eine kürzere Ablaufdauer als die ersten akustischen Daten aufweisen, sind sie besser mit visuellen Daten, die ebenfalls eine kürzere Ablaufdauer aufweisen kompatibel. Die Ablaufdauer ist kürzer, je höher der Wiedergabefaktor ist. Die Ablaufgeschwindigkeit der ersten akustischen Daten und der zweiten akustischen Daten ist aber gleich.

In einer weiteren Weiterbildung der Erfindung sind die zweiten akustischen Daten mittels Markierelementen aus den ersten akustischen Daten gewählt. Die Markierelemente können einmalig durch einen Herausgeber, Entwickler und/oder Benutzer manuell gesetzt werden. Alternativ oder zusätzlich ist eine durch künstliche Intelligenz unterstütze Positionierung der Markierelemente möglich. Zwischen einem ersten Markierelement und einem zugehörigem zweiten Markierelement kann sich eine akustische Information befinden, welche in jedem Fall abgespielt werden muss. Vor dem ersten Markierelement und nach dem zweiten Markierelement kann sich eine akustische Information befinden, die nicht zwingend abgespielt werden muss. Dies kann für beliebig viele weitere erste und zweite Markierelemente gelten.

In einer weiteren Weiterbildung der Erfindung stellen die zweiten akustischen Daten einen Ausschnitt der ersten akustischen Daten dar. In dieser Weiterbildung sind die ersten akustische Daten und die zweiten akustischen Daten zu Teilen identisch. Ein Teil der ersten akustischen Daten wird entfernt, der übrige Anteil bildet die zweiten akustischen Daten.

Steht nur ein Audiotrack zur Verfügung können mit der zuletzt genannten Weiterbildung, insbesondere Marker gesetzt werden, die die Audioabschnitte markieren, die abgespielt werden sollen. Die Verwendung unterschiedlicher Marker und einer unterschiedlichen Anzahl an Marker erlaubt wiederum die Unterstützung unterschiedlicher Vorlaufgeschwindigkeiten.

In einer weiteren Weiterbildung der Erfindung weisen die zweiten akustischen Daten eine Information entsprechend der, der ersten akustischen Daten auf. In dieser Weiterbildung sind die ersten akustischen Daten und die zweiten akustischen Daten zumindest teilweise nicht identisch. Dies kann realisiert sein, indem Information der ersten akustischen Daten auf eine kürzere, knappere Weise wiedergegeben wird und die zweiten akustischen Daten bildet. Die zweiten akustischen Daten sind in dieser Weiterbildung keine bloßen Ausschnitte der ersten akustischen Daten.

Um eine sinnvolle Audiowiedergabe zu ermöglichen, werden in der zuletzt genannten Weiterbildung zusätzliche Audiotracks generiert, die in Abhängigkeit der gewählten Wiedergabefaktoren oder Vorlaufgeschwindigkeit ausgewählt und abgespielt werden.

Werden die beiden zuletzt genannten Weiterbildungen kombiniert, können für einen gegebene Anzahl an separaten Audiotracks, d.h. Audiotracks, die keine bloßen Ausschnitte oder Kopien von Abschnitten anderer Audiotracks sind, eine größere Anzahl an unterschiedlichen Wiedergabefaktoren oder Vorlaufgeschwindigkeiten unterstützt werden.

In einer weiteren Weiterbildung der Erfindung weisen die zweiten akustischen Daten:
- sicherheitsrelevante Informationen,
- kritische Informationen und/oder
- Informationen einer definierten Kategorie
   auf.

In einer weiteren Weiterbildung der Erfindung weisen die zweiten akustischen Daten Informationen auf, die obligatorisch, insbesondere zwingend und mit jeder Wiedergabe der Datei abgespielt werden.

Die zuvor genannten Ausbildungen der zweiten akustischen Daten können Informationen darstellen, welche unter allen Umständen und unabhängig von dem gewählten Wiedergabefaktor wiedergegeben werden sollen. Diese können durch spezielle Marker gekennzeichnet werden.

Eine von der Erfindung ebenfalls abgedeckte Ausführung betrifft einen schnellen Rücklauf oder ein Zurückspulen. Auch wenn eine bestimmte Position in der Datei, insbesondere von einer zeitlich späteren Abspielposition erreicht wird, kann insbesondere Information, insbesondere zweite akustische Daten, welche vor der bestimmten Position liegen, zwingen abgespielt werden. Je nach Wiedergabefaktor enthalten die zweiten akustischen Daten somit Information, welche zwingen abgespielt werden kann, unabhängig von der Position, zu der die Datei gestartet wird.

Die Erfindung umfasst außerdem ein Verfahren zur Ausführung von mindestens einer Aktion an einer technischen Anlage oder einem technischen Gerät, mit den Schritten:
- Wiedergeben von zweiten akustischen Daten durch ein erfindungsgemäßes Verfahren als eine visuelle Information und eine akustische Information und
- Heranziehen der akustischen Information zur Ausführung der mindestens einen Aktion an der technischen Anlage oder dem technischen Gerät, wobei die mindestens eine Aktion insbesondere als:
- Fertigungsschritt,
- Produktionsschritt,
- Wartungsvorgang,
- Service und/oder
- Instandhaltung
   ausgebildet ist.

Die Erfindung umfasst außerdem ein Gerät, insbesondere ein Augmented Reality Gerät oder ein Virtual Reality Gerät, aufweisend:
- eine erste Abrufeinheit, welche ausgebildet ist, einen Wiedergabefaktor, welcher angibt mit welcher Dauer eine Datei wiedergegeben werden soll, abzurufen, wobei die Datei erste akustische Daten aufweist,
- eine zweite Abrufeinheit, welche ausgebildet ist, zweiten akustischen Daten, abzurufen, wobei die zweiten akustischen Daten in Abhängigkeit des Wiedergabefaktors gewählt werden und wobei Informationen der zweiten akustischen Daten Informationen der ersten akustischen Daten entsprechen,
   wobei die zweiten akustische Daten eine Ablaufgeschwindigkeit aufweisen, welche einer Ablaufgeschwindigkeit der ersten akustischen Daten entspricht, und
- eine Wiedergabeeinheit, welche ausgebildet ist, die zweiten akustischen Daten abzuspielen.
   wobei das Gerät ausgebildet ist, ein Verfahren nach einem der vorhergehenden Ansprüche auszuführen.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens und
- Fig. 2: eine schematische Darstellung von visuellen Daten und ersten und zweiten akustischen Daten.

### DETAILLIERTE BESCHREIBUNG DER ERFINDUNG

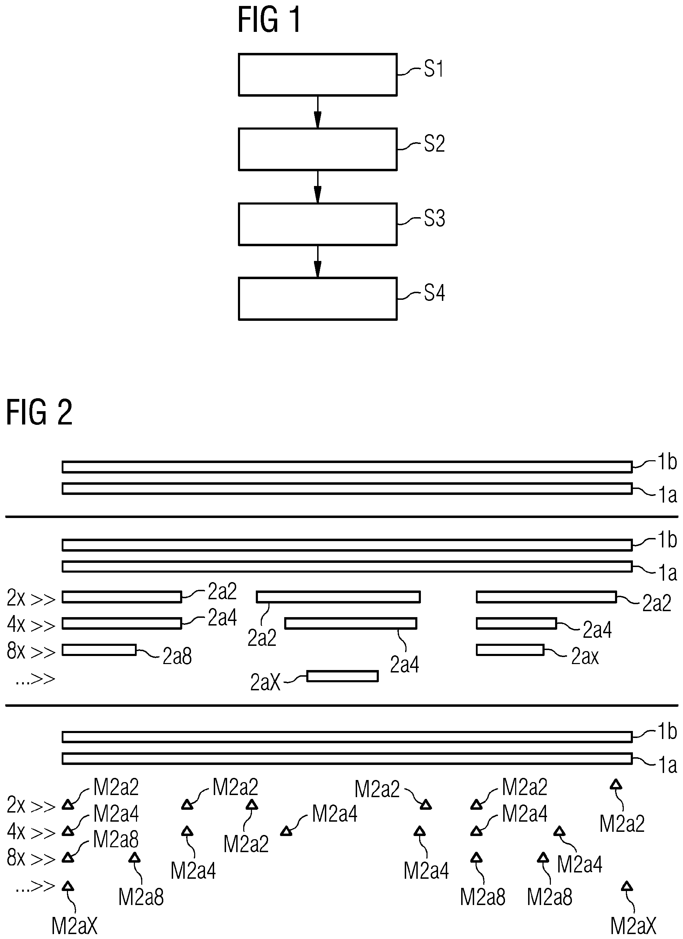

Fig. 1 zeigt ein Ablaufdiagramm eines Verfahrens zur Wiedergabe von zweiten akustischen Daten, mit den Schritten:
- Schritt S1: Abrufen eines Wiedergabefaktors, welcher angibt mit welcher Dauer eine Datei wiedergegeben werden soll, wobei die Datei erste akustische Daten aufweist,
- Schritt S2: Abrufen von zweiten akustischen Daten, wobei die zweiten akustischen Daten in Abhängigkeit des Wiedergabefaktors gewählt werden und wobei Informationen der zweiten akustischen Daten Informationen der ersten akustischen Daten entsprechen,
   wobei die zweiten akustische Daten eine Ablaufgeschwindigkeit aufweisen, welche einer Ablaufgeschwindigkeit der ersten akustischen Daten entspricht,
- Schritt S3: Abspielen der zweiten akustischen Daten und Schritt S4: Abspielen von zweiten visuellen Daten, welche in Abhängigkeit der ersten visuellen Daten und des Wiedergabefaktors gewählt werden.

Fig. 2 zeigt eine schematische Darstellung von visuellen Daten 1b und ersten 1a und zweiten akustischen Daten 2a2, 2a4, 2a8, 2aX.

In einer Weiterbildung der Erfindung stellen die zweiten akustischen Daten 2a2, 2a4, 2a8, 2aX einen Ausschnitt der ersten akustischen Daten dar. In dieser Weiterbildung sind die ersten akustische Daten 1a und die zweiten akustischen Daten zu Teilen 2a2, 2a4, 2a8, 2aX identisch. Ein Teil der ersten akustischen Daten 1a wird entfernt, der übrige Anteil bildet die zweiten akustischen Daten 2a2, 2a4, 2a8, 2aX. Je nach gewähltem Wiedergabefaktor, 2x, 4x, 8x, in Fig. 2, sind die zweiten akustischen Daten 2a2, 2a4, 2a8, 2aX kürzer, das heißt sie weißen eine kürzere Ablaufdauer auf.

Steht nur ein Audiotrack, das heißt eine Version der ersten akustischen Daten 1a, zur Verfügung können mit der zuletzt genannten Weiterbildung, insbesondere Marker M2a2, M2a4, M2a8, M2aX gesetzt werden, die die Audioabschnitte markieren, die abgespielt werden sollen. Die Verwendung unterschiedlicher Marker M2a2, M2a4, M2a8, M2aX und einer unterschiedlichen Anzahl an Markern M2a2, M2a4, M2a8, M2aX erlaubt wiederum die Unterstützung unterschiedlicher Vorlaufgeschwindigkeiten bzw. Wiedergabefaktoren.

In einer weiteren Weiterbildung der Erfindung weisen die zweiten akustischen Daten 2a2, 2a4, 2a8, 2aX eine Information entsprechend der, der ersten akustischen Daten 1a auf. In dieser Weiterbildung sind die ersten akustischen Daten 1a und die zweiten akustischen Daten 2a2, 2a4, 2a8, 2aX zumindest teilweise nicht identisch. Dies kann realisiert sein, indem Information der ersten akustischen Daten 1a auf eine kürzere, knappere Weise wiedergegeben wird und die zweiten akustischen Daten 2a2, 2a4, 2a8, 2aX bildet. Die zweiten akustischen Daten 2a2, 2a4, 2a8, 2aX sind in dieser Weiterbildung keine bloßen Ausschnitte der ersten akustischen Daten 1a.

Um eine sinnvolle Audiowiedergabe zu ermöglichen, werden in der zuletzt genannten Weiterbildung zusätzliche Audiotracks generiert, die in Abhängigkeit der gewählten Wiedergabefaktoren oder Vorlaufgeschwindigkeit ausgewählt und abgespielt werden.

Werden die beiden zuletzt genannten Weiterbildungen kombiniert, können für einen gegebene Anzahl an separaten Audiotracks, d.h. Audiotracks die keine bloßen Ausschnitte oder Kopien von Abschnitten anderer Audiotracks sind, eine größere Anzahl an unterschiedlichen Wiedergabefaktoren oder Vorlaufgeschwindigkeiten unterstützt werden.

In einer weiteren Weiterbildung der Erfindung sind die zweiten akustischen Daten 2a2, 2a4, 2a8, 2aX mittels Markierelementen M2a2, M2a4, M2a8, M2aX aus den ersten akustischen Daten 1a gewählt. Die Markierelemente M2a2, M2a4, M2a8, M2aX können einmalig durch einen Herausgeber, Entwickler und/oder Benutzer manuell gesetzt werden. Alternativ oder zusätzlich ist eine durch künstliche Intelligenz unterstütze Positionierung der Markierelemente M2a2, M2a4, M2a8, M2aX möglich. Zwischen einem ersten Markierelement M2a2, M2a4, M2a8, M2aX und einem zugehörigem zweiten Markierelement M2a2, M2a4, M2a8, M2aX kann sich eine akustische Information befinden, welche in jedem Fall abgespielt werden muss. Vor dem ersten Markierelement M2a2, M2a4, M2a8, M2aX und nach dem zweiten Markierelement M2a2, M2a4, M2a8, M2aX kann sich eine akustische Information befinden, die nicht zwingend abgespielt werden muss. Dies kann für beliebig viele weitere erste und zweite Markierelemente M2a2, M2a4, M2a8, M2aX gelten.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Wiedergabe von zweiten akustischen Daten (2a2, 2a4, 2a8, 2aX), mit den Schritten:
- Abrufen (S1) eines Wiedergabefaktors, welcher angibt mit welcher Dauer eine Datei wiedergegeben werden soll, wobei die Datei erste akustische Daten (1a) aufweist,
- Abrufen (S2) von zweiten akustischen Daten (2a2, 2a4, 2a8, 2aX), wobei die zweiten akustischen Daten (2a2, 2a4, 2a8, 2aX) in Abhängigkeit des Wiedergabefaktors gewählt werden und wobei Informationen der zweiten akustischen Daten (2a2, 2a4, 2a8, 2aX) Informationen der ersten akustischen Daten (1a) entsprechen,
wobei die zweiten akustische Daten (2a2, 2a4, 2a8, 2aX) eine Ablaufgeschwindigkeit aufweisen, welche einer Ablaufgeschwindigkeit der ersten akustischen Daten (1a) entspricht
- und Wiedergeben (S3) der zweiten akustischen Daten (2a2, 2a4, 2a8, 2aX).

2. Verfahren nach Anspruch 1,
wobei die Datei als:
- eine Videodatei,
- eine Trainingsvideodatei,
- eine Anleitungsvideodatei,
- eine Beratungsvideodatei,
- eine Wegleitungsvideodatei,
- eine Augmented Reality Datei und/oder
- eine Virtual Reality Datei
und/oder vorzugsweise
- eine Anleitungsdatei,
- eine Wartungsdatei,
- eine Servicedatei und/oder
- eine Montagedatei
ausgebildet ist.

3. Verfahren nach einem der vorhergehenden Ansprüche,
wobei der Wiedergabefaktor von:
- einer Benutzereingabe,
- von einer Fortbewegungsgeschwindigkeit eines Benutzers,
- von einer Zeitangabe,
- von einem definierbaren Ablaufplan,
- von einer örtlichen Position eines Benutzers und/oder
- von einer örtlichen Position einer Sendeeinheit abhängig ist.

4. Verfahren nach einem der vorhergehenden Ansprüche,
- mit dem weiteren Schritt: Wiedergeben (S4) von zweiten visuellen Daten, welche in Abhängigkeit ersten visuellen Daten (1b) und des Wiedergabefaktors gewählt werden, wobei die ersten visuellen Daten von der Datei aufgewiesen werden.

5. Verfahren nach Anspruch 4,
wobei das Wiedergeben der zweiten visuellen Daten und das Wiedergeben der zweiten akustischen Daten (2a2, 2a4, 2a8, 2aX) unterschiedliche Abspieldauern aufweist.

6. Verfahren nach einem der vorhergehenden Ansprüche,
wobei die ersten akustischen Daten (1a) variable Ablaufgeschwindigkeit aufweisen.

7. Verfahren nach einem der vorhergehenden Ansprüche,
wobei die zweiten akustischen Daten (2a2, 2a4, 2a8, 2aX) eine für den Menschen verständliche Ablaufgeschwindigkeit aufweisen.

8. Verfahren nach einem der vorhergehenden Ansprüche,
wobei die zweiten akustischen Daten (2a2, 2a4, 2a8, 2aX) eine kürzere Ablaufdauer als die ersten akustischen Daten (1a) aufweisen.

9. Verfahren nach einem der vorhergehenden Ansprüche,
wobei die zweiten akustischen Daten (2a2, 2a4, 2a8, 2aX) mittels Markierelementen (M2a2, M2a4, M2a8, M2aX) aus den ersten akustischen Daten (1a) gewählt sind.

10. Verfahren nach einem der vorhergehenden Ansprüche,
wobei die zweiten akustischen Daten (2a2, 2a4, 2a8, 2aX):
- einen Ausschnitt der ersten akustischen Daten (1a) darstellen und/oder
- eine Information entsprechend der, der ersten akustischen Daten (1a) aufweisen.

11. Verfahren nach einem der vorhergehenden Ansprüche,
wobei die zweiten akustischen Daten (2a2, 2a4, 2a8, 2aX):
- sicherheitsrelevante Informationen,
- kritische Informationen und/oder
- Informationen einer definierten Kategorie aufweisen.

12. Verfahren zur Ausführung von mindestens einer Aktion an einer technischen Anlage oder einem technischen Gerät, mit den Schritten:
- Wiedergeben von zweiten akustischen Daten (2a2, 2a4, 2a8, 2aX) durch ein Verfahren nach einem der vorherigen Ansprüche als eine visuelle Information und eine akustische Information und
- Heranziehen der akustischen Information zur Ausführung der mindestens einen Aktion an der technischen Anlage oder dem technischen Gerät, wobei die mindestens eine Aktion insbesondere als:
- Fertigungsschritt,
- Produktionsschritt,
- Wartungsvorgang,
- Service und/oder
- Instandhaltung
ausgebildet ist.

13. Gerät, insbesondere ein Augmented Reality Gerät oder ein Virtual Reality Gerät, aufweisend:
- eine erste Abrufeinheit, welche ausgebildet ist, einen Wiedergabefaktor, welcher angibt mit welcher Dauer eine Datei wiedergegeben werden soll, abzurufen, wobei die Datei erste akustische Daten (a) aufweist,
- eine zweite Abrufeinheit, welche ausgebildet ist, zweiten akustischen Daten (2a2, 2a4, 2a8, 2aX), abzurufen, wobei die zweiten akustischen Daten (2a2, 2a4, 2a8, 2aX) in Abhängigkeit des Wiedergabefaktors gewählt werden und wobei Informationen der zweiten akustischen Daten (2a2, 2a4, 2a8, 2aX) Informationen der ersten akustischen Daten (1a) entsprechen,
wobei die zweiten akustische Daten (2a2, 2a4, 2a8, 2aX) eine Ablaufgeschwindigkeit aufweisen, welche einer Ablaufgeschwindigkeit der ersten akustischen Daten (1a) entspricht und
- eine Wiedergabeeinheit, welche ausgebildet ist, die zweiten akustischen Daten (2a2, 2a4, 2a8, 2aX) abzuspielen.
wobei das Gerät ausgebildet ist, ein Verfahren nach einem der vorhergehenden Ansprüche auszuführen.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.
